Europäisches Patentamt

European Patent Office

Office européen des brevets

(19)

(11) Numéro de publication : **0 026 132 B1**

(12) **FASCICULE DE BREVET EUROPÉEN**

(45) Date de publication du fascicule du brevet :
24.08.83

(51) Int. Cl.³ : **C 22 B 60/02, C 22 B 59/00**

(21) Numéro de dépôt : 80401307.6

(22) Date de dépôt : 12.09.80

(54) **Procédé permettant la récupération globale de l'uranium, des terres rares, du thorium et de l'yttrium contenus dans une solution acide.**

(30) Priorité : 21.09.79 FR 7923517
15.02.80 FR 8003349
25.06.80 FR 8014081
25.06.80 FR 8014082

(43) Date de publication de la demande :
01.04.81 Bulletin 81/13

(45) Mention de la délivrance du brevet :
24.08.83 Bulletin 83/34

(84) Etats contractants désignés :
BE DE FR GB IT NL

(73) Titulaire : **RHONE-POULENC CHIMIE DE BASE**
**25, quai Paul Doumer**
**F-92408 Courbevoie (FR)**

(72) Inventeur : **Leveque, Alain**
**8-10, rue Manin**
**F-75019 Paris (FR)**
Inventeur : **Foraison, Dominique**
**54, rue du Général de Gaulle**
**F-68800 Thann (FR)**
Inventeur : **Sabot, Jean-Louis**
**1 Quater Avenue Lesage**
**F-78600 Maisons-Laffitte (FR)**

(74) Mandataire : **Dubruc, Philippe et al**
**RHONE-POULENC RECHERCHES Service Brevets**
**Chimie et Polymères 25, quai Paul-Doumer**
**F-92408 Courbevoie Cedex (FR)**

(56) Documents cités :
FR A 2 387 189
US A 3 737 513

CHEMICAL ABSTRACTS, vol. 91, 23 juillet 1979,
ref. no 91 : 28147f, page 489 Columbus, Ohio, US
W.D. ARNOLD : « Recent studies of uranium
recovery from wetprocess phosphoric acid with
octylphenyl acid phosphate »

CHEMICAL ABSTRACTS, vol. 75, n° 14, 4 octobre
1971, ref. no 91741e, page 220 Columbus, Ohio,
US T.K.S. MURTHY et al. : « Phenyl phosphoric
acids for extraction of uranium from phosphoric
acid »

(56) Documents cités :
CHEMICAL ABSTRACTS, vol. 75, n° 14, 4 octobre
1971, ref. no 90355v, page 111 Columbus, Ohio,
US T.K.S. MURTHY et al. : « Phenyl phosphates
for extraction of uranium from phosphoric acid »

CHEMICAL ABSTRACTS, vol. 90, n° 24, juin 1979,
ref. no 90 : 193149v, page 418 Columbus, Ohio,
US G.W. MASON et al. : « Extraction of uranium
(VI), thorium (IV), americium (III), and europium
(III) by bis (paraoctylphenyl)-phosphoric acid in
benzene diluent »

CHEMICAL ABSTRACTS, vol. 90, n° 26, 25 juin
1979, ref. no 90 : 210887d, page 445 Columbus,
Ohio, US R.A. NAGLE et al. : « Synergistic effects
in the extraction of uranium (VI) by di-4-octylphe-
nyl phosphoric acid »

CHEMICAL ABSTRACTS, vol. 89, n° 4, 24 juillet 1978, ref. no 89 : 31614v, page 469 Columbus, Ohio, US R.A. NAGLE et al. : « The extraction of uranium (VI) from mineral acid solutions by di-4-octylphenyl phosphoric acid (DOPPA) »

# Procédé permettant la récupération globale de l'uranium, des terres rares, du thorium et de l'yttrium contenus dans une solution acide

La présente invention concerne un procédé de récupération globale de l'uranium, des terres rares, du thorium et de l'yttrium contenus dans une solution acide et elle concerne plus particulièrement la récupération globale de ces métaux d'une solution aqueuse d'acide phosphorique de voie humide par extraction liquide-liquide.

On connaît depuis longtemps, notamment par les travaux de United States Atomic Energy Commission (USAEC), la récupération de l'uranium et d'autres espèces métalliques, à partir d'une solution aqueuse acide les contenant, au moyen d'extractions liquide-liquide, faisant appel en général à des extractants cationiques, le plus souvent dissous dans un diluant organique inerte. Ce faisant, l'uranium et d'autres espèces métalliques sont extraits plus ou moins sélectivement de la phase aqueuse dans la phase organique selon l'extractant choisi, la phase aqueuse de départ et les conditions opératoires, ce après quoi la phase organique enrichie en espèces métalliques est traitée selon des procédés physicochimiques (précipitation, régénération aqueuse ou deuxième cycle d'extraction, etc.) pour en récupérer les métaux valorisables.

Les solutions aqueuses de départ sont constituées d'un acide phosphorique de voie humide obtenu en général par attaque des roches phosphates par l'acide sulfurique soit d'une solution nitrique obtenue par attaque de combustibles nucléaires usés d'où l'on récupère l'uranium et le cas échéant les uranides.

Il est également connu que certains minerais, comme par exemple les apatites, contiennent en plus de l'uranium, des quantités non négligeables d'yttrium, de thorium et des métaux des terres rares qu'il est judicieux de pouvoir extraire et valoriser conjointement à l'uranium à partir des solutions aqueuses d'attaque de ces minerais.

La condition nécessaire et industriellement indispensable pour un procédé de récupération des espèces précédentes et de l'uranium par un procédé d'extraction liquide-liquide, compte tenu des concentrations faibles de ces espèces dans les solutions aqueuses d'attaque des minerais et par conséquent des volumes importants mis en jeu pour une production industrielle, est de pouvoir les récupérer simultanément au moyen d'une étape unique d'extraction avec un taux d'épuisement élevé de la phase aqueuse dans les différentes espèces. C'est-à-dire qu'il y a lieu de disposer d'un extractant puissant et non sélectif des espèces. Après quoi, l'on récupère les métaux par des méthodes conventionnelles de précipitation ou de réextraction et l'on sépare les différentes espèces par des procédés à partir de concentrés solides ou liquides ne nécessitant pas d'appareillages ou d'installations de taille importante.

De plus, il est connu que les solutions acides résultant de l'attaque des minerais, comme c'est notamment le cas de l'acide phosphorique de voie humide, contiennent des quantités importantes de fer pouvant aller jusqu'à 10 g/litre. Il importe donc qu'en plus d'un pouvoir extractant fort et non sélectif pour l'uranium, le thorium, les terres rares et l'yttrium, un agent d'extraction choisi pour le procédé d'extraction de ces espèces, présente un pouvoir extractant relativement faible pour le fer de sorte qu'il soit peu extrait et ne gêne pas les opérations subséquentes de récupération et de séparation.

Enfin, l'extractant recherché doit satisfaire à trois conditions supplémentaires, à savoir :

a) qu'il soit associé à un diluant inerte choisi pour constituer une phase organique d'extraction homogène et dont la concentration en agent extractant soit la plus élevée possible afin d'augmenter la capacité d'extraction de la phase et compatible avec les caractéristiques hydrodynamiques requises,

b) qu'il soit stable au contact des acides forts tels que les acides phosphorique, sulfurique, fluorhydrique, etc., ceci afin de conserver son pouvoir extractant et de pouvoir le recycler pendant des périodes prolongées et,

c) qu'il présente la sélectivité la plus faible vis-à-vis des éléments du groupe des terres rares.

Or, à bien des égards, les extractants connus et utilisés dans la technique ne satisfont pas à l'ensemble des conditions requises pour un procédé d'extraction global de l'uranium, du thorium, de l'yttrium et des terres rares. C'est ainsi que le mélange synergique d'extraction constitué par l'acide di-(2-éthylhexyl) phosphorique (HDEHP) et l'oxyde de trioctylphosphine (TOPO) tel qu'utilisé par HURST et CROUSE dans le brevet US 3.711.591 extrait bien l'uranium au degré d'oxydation VI et les éléments les plus lourds de la série des terres rares mais n'est pas apte à extraire la totalité des terres rares. D'autre part, ce mélange extractif n'extrait pas l'uranium au degré d'oxydation IV ce qui nécessite dans certains cas une oxydation préalable de la solution aqueuse de départ.

Il est également connu que l'on peut extraire l'uranium IV contenu dans une solution aqueuse acide au moyen d'un mélange d'acide octylphényl phosphorique (MOPPA) et d'acide di(octylphényl) phosphorique (DOPPA) dissous dans un solvant aliphatique (voir à ce sujet le brevet US 3.835.214). Toutefois, la mise en œuvre de ce mélange au plan industriel présente certaines difficultés liées au fait que la phase extractive perd peu à peu sa capacité d'extraction et l'on est conduit à réajuster périodiquement la composition du mélange.

Il n'y a également pas d'enseignement sur la possibilité d'extraire et de récupérer les terres rares, l'yttrium et le thorium au moyen d'un tel mélange.

Il existe donc un besoin pour un procédé continu d'extraction globale de l'uranium, du thorium, de

0 026 132

l'yttrium et des terres rares, avec un épuisement substantiel de la phase aqueuse de départ au moyen d'une phase organique stable.

Le but de la présente invention est de fournir un procédé continu de récupération globale de l'uranium IV et/ou VI, des terres rares, du thorium et de l'yttrium contenus dans une solution acide et plus particulièrement la récupération globale des espèces précédentes d'une solution aqueuse acide par extraction liquide-liquide, au moyen d'une phase organique ce par quoi l'on récupère une phase organique contenant les espèces précédentes et une phase aqueuse acide épuisée.

Un autre but de l'invention est de fournir un procédé de récupération des espèces précédentes comprenant en plus le traitement de la phase organique contenant les éléments précédents au moyen d'une phase aqueuse de précipitation, ce par quoi l'on récupère les espèces précédentes sous la forme de sels insolubles.

Dans son aspect le plus général, le procédé de l'invention comprend le traitement d'une phase aqueuse acide contenant de l'uranium, du thorium, de l'yttrium et des terres rares au moyen d'une phase organique homogène comprenant un acide dialkylphényl phosphorique substantiellement exempt du dérivé monoalkylphényl phosphorique et un solvant inerte choisi parmi des composés aliphatiques et des composés aromatiques, utilisés seuls ou en mélange, et comprenant le cas échéant un dérivé solvatant (modifieur) choisi parmi des oxydes de trialkylphosphine, des phosphinates d'alkyle, des phosphonates d'alkyle, des phosphates d'alkyle et des alkylsulfoxydes, ce par quoi, en tant que résultat, on recueille une phase aqueuse acide substantiellement épuisée et une phase organique chargée en uranium, thorium, yttrium et terres rares. Ladite phase aqueuse acide de départ est un acide phosphorique brut de voie humide où elle a été obtenue soit à partir d'un phosphogypse résiduaire contenant les espèces métalliques précitées à l'état insoluble par traitement au moyen d'un acide minéral fort en solution aqueuse, soit en tant que raffinat aqueux de l'extraction aux solvants insolubles ou peu solubles à l'eau d'un acide phosphorique brut de voie humide.

L'invention comprend en outre un procédé de récupération des espèces métalliques contenues dans la phase organique précédente caractérisé en ce que la phase organique chargée est traitée au moyen d'une phase aqueuse d'acide fluorhydrique dans une solution d'acide fort choisi parmi l'acide phosphorique et l'acide sulfurique, ce par quoi l'on précipite dans la phase aqueuse les espèces métalliques sous la forme de sels, que l'on sépare.

I. Phase aqueuse acide de départ

La phase aqueuse de départ contient un acide minéral fort tel que l'acide phosphorique, sulfurique, chlorhydrique et les espèces métalliques recherchées à l'état de traces (la concentration habituelle en uranium est comprise entre 0 et 500 ppm et la concentration en terres rares, yttrium et thorium comprise entre 100 et 3 000 ppm). Une telle phase aqueuse acide est par exemple :

1) L'acide phosphorique brut de voie humide obtenu par attaque des apatites par l'acide sulfurique et filtration du gypse. En général, la solution brute subit un prétraitement destiné à la clarifier et à faciliter sa mise en œuvre lors de l'extraction ultérieure. La teneur pondérale en $P_2O_5$ est habituellement comprise entre 25 et 40 % ; ou

2) Une solution aqueuse acide obtenue par traitement au moyen d'un acide minéral fort d'un phosphogypse résiduaire contenant les espèces à l'état insoluble et provenant de l'attaque par l'acide sulfurique d'un minerai apatitique.

La demanderesse a en effet constaté que, au cours de l'attaque de minerais apatitiques par l'acide sulfurique, si le taux de solubilisation de l'uranium dans la majorité des cas est proche de 100 %, par contre en ce qui concerne les terres rares, le thorium et l'yttrium, en fonction des conditions de mise en œuvre, on observe des taux de mise en solution très variables allant de quelques pourcents au plus, à plus de 30 %. Par conséquent, il s'avère important de récupérer les espèces restées à l'état insoluble dans le phosphogypse résultant de l'attaque d'une apatite par l'acide sulfurique.

Selon l'origine de la roche et les conditions d'attaque, la teneur en terres rares, yttrium et thorium est variable et comprise entre quelques mg et 20 g par kg de solide.

Pour obtenir ladite solution aqueuse acide, le phosphogypse précédent est soumis à un traitement au moyen d'un acide fort. Différents essais de lixiviation au moyen d'acides forts montrent que l'on peut solubiliser une fraction importante des espèces précipitées contenues dans le phosphogypse. C'est ainsi que l'on peut utiliser des acides forts tels que $H_2SO_4$, HCl, $HNO_3$ ; parmi ceux-ci on préfère $H_2SO_4$ qui permet une grande sélectivité vis-à-vis des éléments recherchés en gardant le gypse insoluble et n'altère pas les propriétés de filtration du gypse, caractéristiques des conditions d'attaque de l'apatite. De plus le procédé s'intègre bien dans le procédé classique de fabrication d'acide phosphorique de voie humide par attaque à l'acide sulfurique.

La concentration de l'acide fort utilisé dépend de sa nature, du temps de contact avec le phosphogypse, de la température et du rapport liquide-solide utilisé. Ces conditions sont décrites dans la littérature, en particulier dans l'article de A. M. ANDRIANOV et Coll. (Zhurnal Prikladnoi Khimii — Vol. 49, n° 3, pp. 636-638 C 1976). A titre d'exemple, si l'on utilise l'acide sulfurique, on traite habituellement le phosphogypse au moyen d'une solution aqueuse 0,5 à 3 M. Le temps de contact du phosphogypse et de la solution d'acide fort n'est pas critique mais pour un bon rendement de solubilisation des terres rares, il

4

est habituellement compris entre 15 minutes et 3 heures. Après la fin de la réaction, on sépare un résidu de phosphogypse épuisé et une solution acide enrichie en espèces recherchées, laquelle est ensuite soumise à l'étape d'extraction liquide-liquide pour les récupérer. Toutefois, pour des considérations d'économie du procédé, dans une variante préférée, il peut être avantageux de soumettre la solution acide obtenue à un nouveau contact avec du phosphogypse frais, dans les mêmes conditions, et cette opération peut être réalisée plusieurs fois successivement en continu ou en discontinu. Ensuite le phosphogypse épuisé est lavé à l'eau et la solution de lavage est réunie à la solution acide précédente. Différents dispositifs de contact et de séparation du phosphogypse peuvent être mis en œuvre pour atteindre les conditions économiques optimales en fonction de la nature du gypse.

Ensuite la solution aqueuse acide obtenue et contenant les espèces recherchées est soumise à l'étape d'extraction qui sera décrite ci-après. Ce faisant, il est possible de récupérer industriellement jusqu'à plus de 90 % des terres rares, du thorium et de l'yttrium solubilisés par lavage du gypse, soit, selon les minerais, généralement de 30 à 100 % des terres rares, de l'yttrium et du thorium contenus dans le phosphogypse initial.

Ce procédé d'extraction et de réextraction présente l'avantage de restituer l'acide de lavage qui peut être recyclé ou qui peut servir à nouveau pour extraire du gypse les espèces, ou bien qui peut servir à l'attaque du minerai.

3) Le raffinat aqueux de l'extraction aux solvants insolubles ou peu solubles dans l'eau d'un acide phosphorique de voie humide.

En effet, il existe une demande commerciale croissante en acide phosphorique purifié qui est en général utilisé dans l'industrie de l'alimentation humaine et animale et en tant que produit de départ de polyphosphates pour compositions lessivielles. De ce fait, une fraction croissante de l'acide phosphorique brut de voie humide est purifié en général par des procédés connus d'extraction liquide-liquide au moyen de solvants organiques non solubles ou peu solubles dans l'eau tel que des phosphates d'alkyle, comme par exemple le phosphate de tributyle, ou des alcools aliphatiques, comme par exemple le butanol ou l'isobutanol. De tels procédés de purification sont décrits dans les brevets antérieurs au nom de la demanderesse FR 1.531.487, 1.553.095 et 2.259.787 à titre d'exemples non limitatifs. Selon ces procédés, la solution d'acide phosphorique brut de voie humide résultant de l'attaque d'une roche phosphocalcique par un acide fort tel que $H_2SO_4$ et après filtration est soumise à une extraction au moyen des solvants précités ce par quoi l'on extrait dans la phase organique une fraction importante de l'acide phosphorique. Après séparation des phases, on recueille en sortie de la batterie d'extraction une phase organique riche en $P_2O_5$ et une solution aqueuse épuisée (ou raffinat) d'une concentration faible en $P_2O_5$ et contenant la majeure partie des impuretés cationiques présentes dans la solution aqueuse de départ. En plus, le cas échéant, on ajoute, au cours de ladite extraction, de l'acide sulfurique concentré pour favoriser l'extraction des espèces phosphatée ; de ce fait, une fraction importante de l'acide sulfurique ajouté se retrouve dans le raffinat aqueux. Par conséquent, une fraction importante, sinon la totalité, de l'uranium, des terres rares, de l'yttrium et du thorium se retrouve dans ledit raffinat d'où il s'avère intéressant de la récupérer.

Le raffinat aqueux utilisé dans la présente invention et résultant de l'extraction liquide-liquide contient, entre autres, de l'acide phosphorique à une concentration pondérale exprimée en $P_2O_5$ en général inférieure à 20 %, de préférence voisine de 10 %, de l'acide sulfurique résultant de l'excès de réactif introduit à l'attaque de la roche phosphocalcique à une teneur pondérale en général de l'ordre de 1 à 3 %, selon l'excès présent au départ, d'autres anions tels que les ions fluorures, etc., et des cations tels que ceux du fer, aluminium, magnésium, alcalin, uranium, terres rares, yttrium et thorium, ces quatre derniers étant en général à l'état de traces. Bien entendu si le procédé d'extraction a comporté l'addition d'acide sulfurique, sa concentration dans le raffinat est plus élevée et peut aller jusqu'à environ 15 % en poids, tandis qu'inversement la teneur pondérale en $P_2O_5$ peut être aussi faible que 2 % (voir à ce sujet les brevets précités).

Le raffinat aqueux précédent convient particulièrement bien en tant que moyen de départ utilisé dans le présent procédé d'extraction. Ce faisant, après réextraction comme il sera expliqué ci-après, il est possible de récupérer industriellement jusqu'à au moins 90 % de l'uranium, des terres rares, du thorium et de l'yttrium présents dans le raffinat.

II. Phase organique d'extraction

La phase organique d'extraction utilisée dans la présente invention comprend comme extractant un acide di(alkylphényl)phosphorique. Par groupement alkylphényl dans l'acide précédent, on entend un groupement dans lequel le radical alkyle est un radical aliphatique à chaîne droite ou ramifiée contenant de quatre à douze atomes de carbone. De préférence, le radical alkyle est le radical octyle, plus particulièrement le radical 1,1,3,3 tétraméthylbutyle, de préférence en position 4. L'invention n'est pas limitée à l'utilisation d'un seul acide di(alkylphényl) phosphorique mais elle comprend en outre l'utilisation d'un de leurs mélanges.

La phase organique d'extraction comprend en outre un solvant inerte choisi parmi des composés aliphatiques tels que, par exemple, l'heptane, le dodécane, l'hexane et les coupes pétrolières du type kérosène, des composés aromatiques tels que, par exemple, le benzène, le toluène, l'éthylbenzène, le

5

xylène et les coupes du type Solvesso (marque déposée de la Société EXXON) utilisés seuls ou en mélange.

Le solvant organique inerte sera chosi en fonction de la nature chimique de la chaîne aliphatique de l'agent d'extraction. C'est ainsi que dans le cas où l'on fait utilisation de l'acide di(octylphényl) phosphorique (DOPPA) d'une solubilité limitée dans les hydrocarbures aliphatiques (par exemple sa solution saturée à 20 °C dans le kérosène contient moins de 0,1 mole par litre) il y a lieu d'accroître cette solubilité dans la phase organique qui est nécessaire à l'obtention de conditions industrielles d'extraction, par utilisation d'un mélange hydrocarbure aliphatique-hydrocarbure aromatique. Toutefois, dans ce cas précis, les coefficients de partage des espèces recherchées subissent une diminution sensible lorsque le rapport pondéral hydrocarbure aromatique/hydrocarbure aliphatique du diluant augmente.

D'une manière générale, le choix de la concentration en acide di(alkylphényl) phosphorique dans la phase organique et du rapport pondéral du diluant aromatique ou diluant aliphatique résultera d'un compromis prenant en compte la solubilité de l'acide di(alkylphényl) phosphorique considéré dans le système et les coefficients de partage respectifs des différentes espèces entre la phase organique et la phase aqueuse.

Dans la pratique, la concentration en acide di(alkylphényl) phosphorique est comprise entre 0,1 M et 1 M, de préférence voisine de 0,5 M, le rapport pondéral diluant aromatique/diluant aliphatique, dans le cas où il est nécessaire d'ajouter un diluant aromatique, est compris entre 0,01 et 100, de préférence voisin de 1.

De plus, afin d'améliorer la solubilité de l'extractant dans un mélange de diluants et de produire un effet favorable d'extraction sur les espèces recherchées, la demanderesse a trouvé qu'il était judicieux d'ajouter à la phase organique un agent solvatant (modifieur) choisi parmi des oxydes de trialkylphosphine, des phosphinates d'alkyle, des phosphonates d'alkyle, des phosphates d'alkyle et des alkylsulfoxydes. On préfère utiliser dans la pratique l'oxyde de trioctylphosphine, le dibutylbutyl phosphonate ou le phosphate de tributyle. La teneur pondérale en modifieur dans la phase organique est comprise entre 1 et 30 % en poids, de préférence voisine de 5 %.

De plus, dans certains cas, la demanderesse a trouvé qu'il était judicieux, afin d'améliorer les caractéristiques hydrodynamiques de la phase organique, de lui incorporer un agent de modification choisi parmi des composés hydroxylés aliphatiques ou alkylaryliques contenant plus de 4 atomes de carbone. De préférence on utilise pour ce faire un alcool aliphatique, de préférence à 10 atomes de carbone ou un alkylphénol tel que le nonylphénol. La concentration de l'agent de modification dans la phase organique est comprise entre 5 et 50 %, de préférence voisine de 20 %.

La phase organique extractive précédemment décrite présente vis-à-vis de l'uranium, du thorium, de l'yttrium et des terres rares, un pouvoir extractant élevé. De plus, il a été trouvé que ladite phase d'extraction est opérante sur des solutions aqueuses acides quel que soit le pouvoir de réduction de ces solutions aqueuses, c'est-à-dire notamment, quel que soit le degré d'oxydation de l'uranium ($U_{IV}$ ou $U_{VI}$). En particulier, on peut traiter des solutions contenant à la fois $U_{(IV)}$ et $U_{(VI)}$. Toutefois, en vue d'une meilleure séparation d'avec le fer, on peut préférer opérer sur une phase aqueuse initiale réduite de sorte que le fer soit à la valence deux, moins extractible, ce qui a de plus pour conséquence d'augmenter de façon appréciable les coefficients d'extraction des éléments recherchés.

Le rapport des débits de la phase aqueuse à la phase organique lors de la mise en contact n'est pas critique et il est généralement compris entre 0,1 et 20, de préférence entre 1 et 5.

La température pour la mise en contact n'est pas critique pourvu que les extractants soient solubles dans les diluants. Habituellement on opère entre 15 °C et 60 °C, de préférence au voisinage de 40 °C.

La mise en contact se pratique dans des appareils bien connus dans la technique tels que des mélangeurs-décanteurs disposés en batteries à plusieurs étages, des colonnes garnies ou pulsées, le contact étant à co-courant ou à contre-courant. on obtient de la sorte un épuisement substantiel de la phase aqueuse en uranium, thorium, yttrium et terres rares.

III. Réextraction de la phase organique

Le procédé de l'invention comprend également le traitement de la phase organique précédente contenant les espèces recherchées afin de les récupérer sous forme concentrée.

Compte tenu du fort pouvoir extractant de la phase organique, on réalise une réextraction efficace des espèces par précipitation par l'acide fluorhydrique en milieu aqueux très acide. Des acides convenant bien pour cette étape sont particulièrement les acides sulfurique, phosphorique, etc. Toutefois, l'acide phosphorique est préféré pour son efficacité et compte tenu des propriétés hydrodynamiques de la solution $HF-H_3PO_4$. De préférence, la concentration en $H_3PO_4$ est comprise entre 30 et 60 % en $P_2O_5$, plus particulièrement entre 45 et 55 % de $P_2O_5$ et la concentration en HF comprise entre 3 et 10 % en poids.

Ce faisant, on précipite un mélange de sels des espèces précitées que l'on isole de la phase aqueuse et qui constitue la production. La séparation des espèces entre elles est réalisée dans une étape ultérieure par des moyens connus et ne fait pas partie de l'invention.

La réextraction se pratique sur des appareils bien connus de contact liquide-liquide à une température comprise entre 20 °C et 60 °C. Après séparation de la phase organique et de la phase aqueuse chargée en précipité, la phase organique est recyclée à l'extraction. De même, la phase aqueuse, après séparation du précipité, et après avoir été rechargée en HF et $H_3PO_4$ est recyclée à la réextraction.

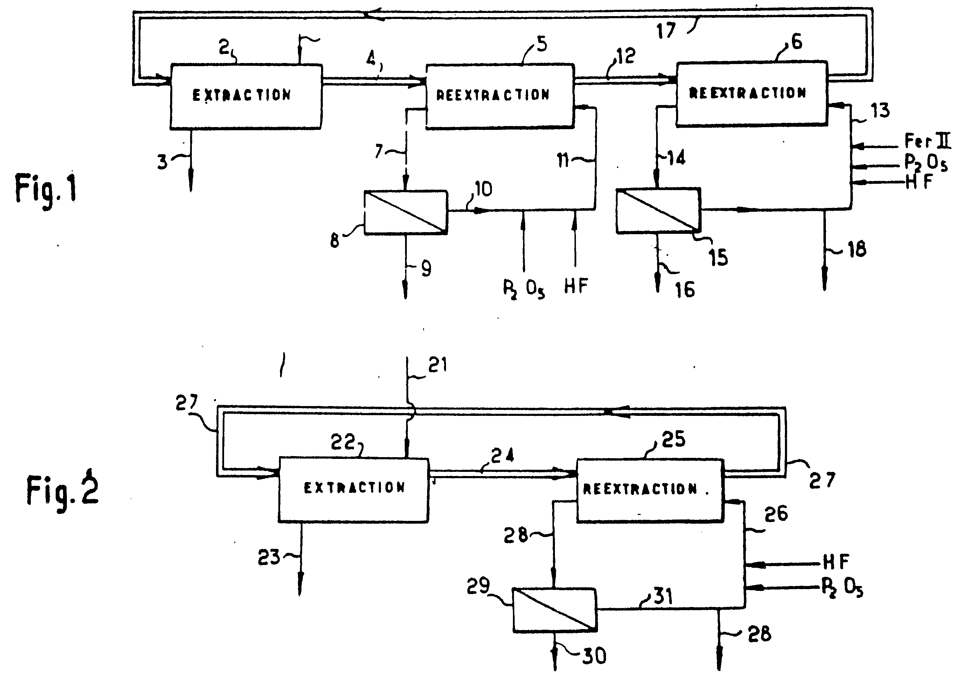

Dans un premier mode de réalisation opérant sur une solution aqueuse initiale préalablement réduite et contenant l'uranium au degré d'oxydation IV, la zone de réextraction est un appareil à un seul étage. Ce mode de mise en œuvre est illustré sur la figure 2 (exemple 8).

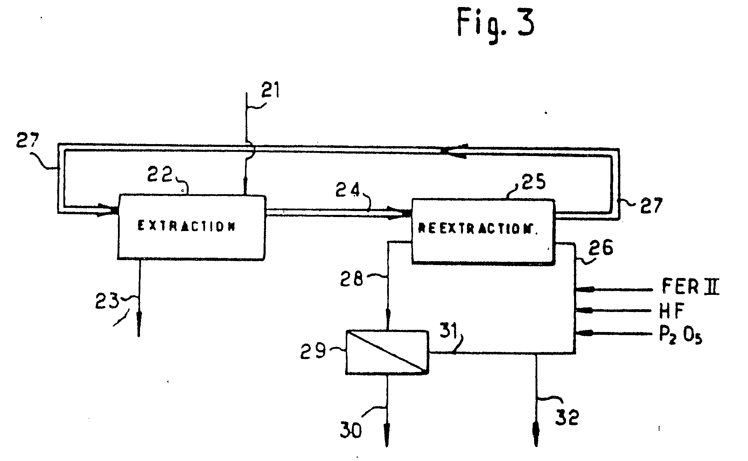

Dans un deuxième mode de réalisation opérant sur une solution aqueuse initiale dans laquelle l'uranium est présent au degré d'oxydation VI ou bien VI et IV, la réextraction se pratique dans une zone à un seul étage au moyen d'une solution aqueuse de réextraction contenant l'acide fluorhydrique, l'acide phosphorique et, en plus, un agent réducteur pour l'uranium VI, tel que des ions fer II, ce par quoi l'on précipite les espèces recherchées sous forme de sels. Ce mode de réalisation est illustré sur la figure 3 (exemple 9).

Dans un troisième mode de réalisation opérant sur une solution aqueuse initiale contenant l'uranium au degré d'oxydation VI ou bien VI et IV, la réextraction se pratique en deux temps. Dans une première zone de réextraction, comportant habituellement un étage, la solution organique initiale est mise en contact avec une première solution aqueuse contenant de l'acide fluorhydrique et de l'acide phosphorique ce par quoi l'on précipite sous forme de sels l'yttrium, les terres rares, le thorium et une partie de l'uranium.

Ensuite la phase organique partiellement épuisée alimente une deuxième zone de réextraction généralement à un seul étage où elle est mise en contact avec une deuxième solution aqueuse d'acide fluorhydrique et d'acide phosphorique contenant en plus un réducteur pour l'uranium VI, tel que des ions fer II, ce par quoi le reste de l'uranium VI contenu dans la phase organique sortant de la première zone est réduit, extrait et précipité sous forme de sel d'uranium IV avec une efficacité élevée d'épuisement. Ce mode réalisation est représenté sur la figure 1 (exemple 7).

IV. Récupération de HF et $H_3PO_4$ dans la phase organique

Dans les procédés précédents, au cours de la réextraction des espèces au moyen de la phase aqueuse contenant HF et $H_3PO_4$, le cas échéant en présence d'un réducteur, la phase organique qui n'est pas ou très peu chargée en HF et qui est peu chargée en $H_3PO_4$, extrait une fraction des acides phosphorique et fluorhydrique contenus dans la solution aqueuse de réextraction. Ceci est particulièrement vrai si les paramètres de concentration de la phase aqueuse sont réglés pour assurer une réextraction efficace des espèces, c'est-à-dire pour une concentration pondérale en $H_3PO_4$ de la phase aqueuse comprise entre 30 et 85 % et pour une concentration en HF supérieure à 2 %, comme par exemple une solution aqueuse à 50 % en poids d'acide phosphorique compté en $P_2O_5$ et à 6 % de HF.

Il s'ensuit que l'extraction de cette fraction des acides, qui est perdue pour la réextraction, a pour résultat un abaissement très sensible des concentrations dans la boucle de circulation de la phase aqueuse de réextraction et qu'en conséquence il y a lieu de prévoir une recharge importante des acides, ce qui est nuisible à l'économie du procédé.

L'invention comporte donc en plus un perfectionnement de récupération de l'acide fluorhydrique et de l'acide phosphorique qui sont extraits de la boucle de réextraction par la phase organique. Après réextraction des espèces et séparation des phases aqueuse et organique, la phase organique épuisée en espèces métalliques, avant d'être réintroduite dans la zone d'extraction de la solution aqueuse acide initiale, est soumise à un traitement dans une zone de lavage, au moyen d'une solution aqueuse, ce par quoi l'on récupère une phase organique substantiellement épuisée en acides phosphorique et fluorhydrique, la solution aqueuse sortant de la zone de lavage étant ensuite réunie à la solution aqueuse de réextraction.

La solution aqueuse de lavage de la phase organique épuisée en espèces métalliques est constituée d'eau ou bien d'une solution d'acide phosphorique dont la concentration est inférieure à celle de l'acide phosphorique dans la boucle de la solution aqueuse de réextraction.

Les paramètres de la mise en contact précédente notamment en ce qui concerne le nombre d'étages de la zone de lavage, le rapport des débits de phase et la température peuvent varier dans des limites assez larges mais il est avantageux de les choisir de façon à assurer un équilibre économique de fonctionnement de la boucle de la solution de réextraction. Ces paramètres sont bien connus dans la technique. Habituellement l'appareil de lavage comprend au moins un étage et le rapport débit de phase organique/débit de phase aqueuse est compris entre 10 et 100, de préférence voisin de 45. L'appareil de mise en contact est en général constitué d'une batterie de mélangeurs-décanteurs, d'une colonne pulsée ou garnie, le flux des phases étant à co-courant ou à contre-courant. Habituellement la température de mise en contact est comprise entre 60 °C et la température ambiante.

Après avoir réuni la solution aqueuse précédente sortant de la zone de lavage à la solution aqueuse de réextraction, le courant réuni est réajusté en ses titres en acide phosphorique, fluorhydrique, et le cas échéant, en agent réducteur.

Comme en général les concentrations en $H_3PO_4$ et en HF de la solution sortant de la zone de lavage précédente sont inférieures à celles de la solution aqueuse de la boucle de réextraction, la réunion des deux solutions fournit un courant appauvri en acide. Il y a donc lieu, en régime permanent, de pratiquer sur le courant réuni une opération de concentration, en général par évaporation, à l'aide d'un dispositif connu, afin d'éliminer l'eau et de recycler l'acide fluorhydrique. on introduit ensuite les quantités de HF, $H_3Po_4$ et le cas échéant d'agent réducteur de l'uranium, afin de maintenir les différentes concentrations constantes, en régime permanent, dans le courant alimentant la zone de réextraction, dans les meilleures conditions économiques.

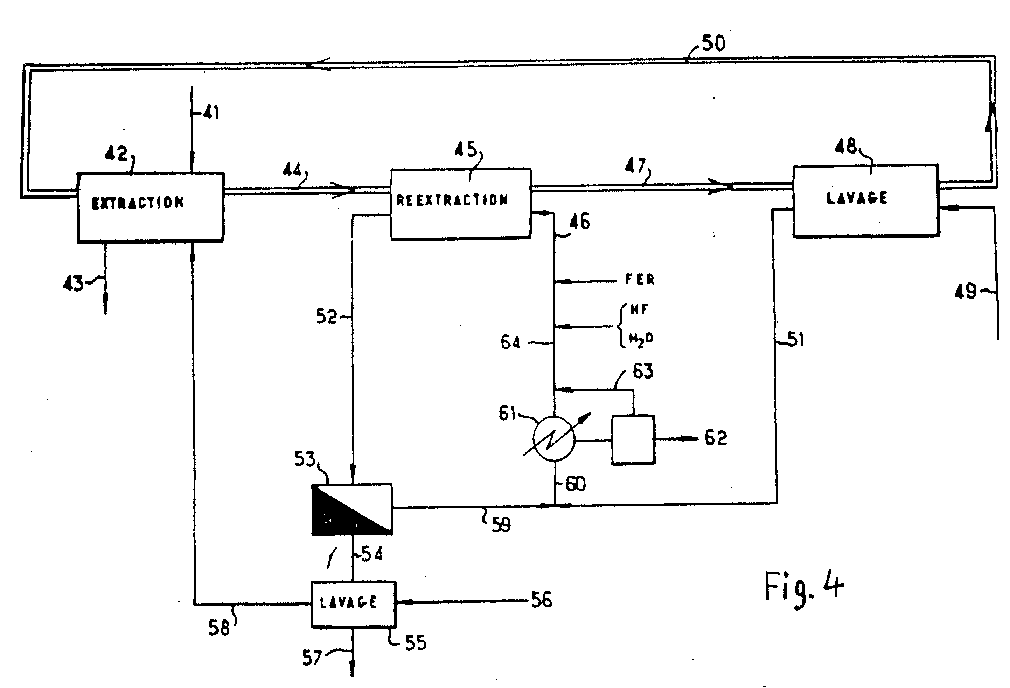

Ce perfectionnement de récupération sera mieux compris en se référant au schéma de la figure 4 qui est un perfectionnement du schéma de la figure 3.

On introduit par la ligne (41) une solution aqueuse acide, généralement constituée d'un acide phosphorique brut de voie humide contenant les espèces recherchées dans une zone d'extraction (42) où elle est mise en contact avec une phase organique (50). On recueille en (43) une solution aqueuse substantiellement épuisée et en (44) une phase organique enrichie. Celle-ci alimente ensuite une zone de réextraction (45) en général à un seul étage où elle est mise en contact avec une solution aqueuse (46) d'acides fluorhydrique et phosphorique contenant un réducteur pour l'uranium VI, en général des ions fer II. Après séparation des phases, la phase organique (47) substantiellement épuisée en uranium, thorium, terres rares et yttrium alimente une zone de lavage (48) où elle est mise en contact avec une solution aqueuse (49) en général constituée d'eau ou d'une solution aqueuse diluée d'acide phosphorique. De la zone (48) sort une phase organique (50) substantiellement épuisée en acides qui est recyclée à la zone d'extraction (42) et une solution de lavage (51).

Dans la zone de réextraction (45) précédente, les espèces recherchées sont réextraites de la phase organique et précipitent sous forme de sels dans la phase aqueuse de réextraction, laquelle sort de la zone (45) par la ligne (52) et alimente une zone de séparation (53) d'où l'on récupère un gâteau (54) lequel est lavé dans une zone de lavage (55) au moyen d'un courant aqueux (56) qui est en général de l'eau. On récupère en (57) un précipité comprenant essentiellement $UF_4$, $TRF_3$, $YF_3$, $ThF_4$ et $CaF_2$ qui constitue la production. L'eau-mère de lavage (58) est de préférence recyclée dans la zone d'extraction (42).

L'eau-mère (59) sortant de la zone de séparation (53) est réunie au courant (51) sortant de la zone de lavage (48) de la phase organique et le courant réuni (60) est soumis à concentration dans une zone d'évaporation (61) où l'on sépare un courant d'eau (62) et une solution aqueuse (63) enrichie en HF, laquelle est réunie au courant aqueux concentré sortant de la zone de concentration (61) pour former le courant (64) dont le titre est ajusté en ions fer II, HF et $H_2O$ pour constituer le courant (46) alimentant la zone de réextraction (45).

Grâce à ce perfectionnement, on récupère une fraction substantielle de l'acide phosphorique et de l'acide fluorhydrique qui ont été extraits par la phase organique au cours de la réextraction dans la zone (45) et de les réintroduire dans la boucle de la solution de réextraction, fournissant de ce fait une économie importante des réactifs utilisés. C'est ainsi notamment qu'il est possible dans des conditions industrielles normales de récupérer jusqu'à 100 % du $P_2O_5$ extrait et jusqu'à 90 % de HF extrait qui, sans cela, seraient perdus pour le procédé.

Bien entendu, ce perfectionnement de récupération des acides fluorhydrique et phosphorique s'applique aux autres modes de mise en œuvre du procédé de l'invention.

Les exemples suivants sont donnés à titre illustratif, les pourcentages étant exprimés en poids sauf indication contraire.

## Exemple 1

On fournit dans cet exemple les coefficients de partage des espèces recherchées (rapports de concentration des espèces entre la phase organique et la phase aqueuse).

On met en contact un litre d'acide phosphorique brut de voie humide non réduit, titrant 30 % de $P_2O_5$ et contenant 135 mg/l d'uranium VI, 0,350 g/l de terres rares exprimées sous forme d'oxydes des terres rares $Tr_2O_3$ (3 mg/l $Eu_2O_3$, 150 mg/l $Y_2O_3$), 2 mg/l de thorium IV et 7 g/l de fer III, avec un litre d'une phase organique constituée de 36 % de Solvesso (hydrocarbures aromatiques marque commerciale de la Société EXXON), 36 % de kérosène, 23 % de DOPPA contenant moins de 1 % de MOPPA, 5 % d'oxyde de trioctylphosphine, à température ambiante. Les coefficients de partage sont les suivants :

| | |
|---|---|
| $P_{Th\,4+>}$ | 10 |
| $P_{U(VI)}$ | 6 |
| $P_{YO_3}$ | 10 |
| $P_{Eu_2O_3}$ | 1,2 |
| $P_{Fe}$ | 0,4 |

## Exemple 2

On réalise la mise en contact des solutions aqueuse et organique de l'exemple 1 à contre-courant dans un appareil d'extraction comportant six mélangeurs-décanteurs à 20 °C dans un rapport volumique des phases de 1. Après séparation des phases, on récupère de la sorte, dans la phase organique, plus de 99 % de l'uranium, 83 % des terres rares (dont plus de 95 % dans le cas de l'europium et de l'yttrium), 99 % du thorium et 30 % du fer contenus initialement dans la phase aqueuse.

## Exemple 3

On réalise l'expérience de l'exemple 1, en opérant cette fois sur l'acide phosphorique brut préalablement réduit par du fer métal.

Après contact des deux phases dans un rapport volumique 1/1, les coefficients de partage s'établissent comme suit :

| | |
|---|---|
| $P_{Th^4} + >$ | 25 |
| $P_{U_{(IV)}} >$ | 25 |
| $P_{Y_2O_3} >$ | 25 |
| $P_{Eu_2O_3}$ | 9,5 |
| $P_{Fe}$ | 0,1 |

## Exemple 4

On reprend les phases aqueuses et organiques de l'exemple 3 et on les met en contact à contre-courant sur six étages théoriques, dans une batterie de mélangeurs-décanteurs dans un rapport volumique phase aqueuse/phase organique de 1 à 25 °C.

Après séparation des phases, on recueille dans la phase organique plus de 98 % de l'uranium IV, des terres rares, de l'yttrium et du thorium contenus initialement dans la phase aqueuse.

## Exemple 5

Cet exemple montre le procédé de récupération non sélectif des espèces à partir de la phase organique enrichie.

On reprend pour ce faire, l'extrait organique chargé obtenu dans l'exemple 2 et on le met en contact à 50 °C dans un mélangeur-décanteur avec une solution aqueuse de composition pondérale 56 % $P_2O_5$ et 5 % HF dans un rapport volumique phase organique/phase aqueuse de 2. On réextrait et précipite dans la phase aqueuse 35 % de l'uranium VI et plus de 90 % des terres rares, de l'yttrium et du thorium contenus dans la phase organique.

## Exemple 6

On répète l'expérience de l'exemple 5 en utilisant l'extrait organique de l'exemple 3 issu d'une extraction en batterie de mélangeur-décanteur à 6 étages. Dans ce cas, on récupère sous forme de précipité dans la phase aqueuse plus de 90 % de l'uranium, des terres rares, du thorium et de l'yttrium contenus dans la phase organique.

## Exemple 7 : Récupération à partir d'un acide phosphorique brut

Cet exemple décrit un procédé continu tel qu'illustré sur la figure 1 pour la récupération des espèces précitées.

On introduit par la ligne (1) un acide phosphorique brut de voie humide contenant :

| | |
|---|---|
| $P_2O_5$ | 30 % en poids |
| Uranium VI | 135 mg/l |
| $Tr_2O_3 + ThO_2$ | 0,35 g/l |
| dont $Y_2O_3$ | 0,15 g/l |

dans une batterie d'extraction (2) (mélangeurs-décanteurs) constituée de 7 étages théoriques à 25 °C à contre-courant d'une phase organique (17) comprenant un diluant constitué de 50 % en poids de kérosène et de 50 % en poids de Solvesso et contenant DOPPA à une concentration de 0,5 mole/litre et TOPO à une teneur pondérale de 5 %, dans un rapport volumique des phases de 1. Il sort en (3) un raffinat aqueux épuisé et en (4) une phase organique enrichie. Celle-ci alimente successivement deux unités de régénération à un seul étage (5) et (6). Dans la première unité (5), la phase organique est mise en contact avec une phase aqueuse circulant en boucle fermée titrant 55 % de $P_2O_5$ et 6 % HF, dans un rapport volumique des phases organique/aqueuse de 1/2 à 50 °C. Après séparation des phases, la phase aqueuse qui contient le précipité des sels de $U_{VI}$, TR, Y et Th est envoyée par (7) dans l'unité de filtration (8) où l'on sépare le solide (9) qui constitue la production. Le filtrat sortant en (10) est rechargé en HF et $P_2O_5$ à la concentration précédente et est recyclé à l'unité de régénération par la ligne (11).

La phase organique (12) partiellement épuisée alimente ensuite l'unité réextraction (6) où elle est mise en contact dans un rapport volumique phase organique/phase aqueuse de 10/1, à 50 °C avec une solution aqueuse (13) titrant 51 % de $P_2O_5$, 6 % de HF et 5 g/l d'ions fer II.

Après séparation des phases, la phase organique épuisée (17) est recyclée à la batterie d'extraction (2) et la phase aqueuse (14) sortant chargée en précipité de sel d'$U_{IV}$ est envoyée dans une unité de filtration (15) où l'on récupère le précipité (16). Selon cette mise en œuvre on obtient une répartition de l'uranium dans les deux concentrés, 35 % dans (9) avec les terres rares et 65 % dans le précipité (16).

## Exemple 8

Cet exemple illustre au moyen de la figure 2, un mode de réalisation comportant la réduction préalable de l'acide phosphorique brut au moyen de fer. L'acide brut réduit contient :

| | |
|---|---|
| $P_2O_5$ | 30 % |
| Uranium (IV) | 135 mg/l |
| $TR_2O_3 + ThO_2$ | 0,350 g/l |
| dont $Y_2O_3$ | 0,150 g/l |
| $Fe^{2+}$ | 11 g/l |

On introduit cet acide par la ligne (21) dans une batterie (22) de mélangeurs-décanteurs comportant 7 étages théoriques, à 25 °C, à contre-courant d'une phase organique (27) identique à celle de l'exemple 1, dans un rapport volumique phase organique/phase aqueuse de 1/5. Il sort en (23) un raffinat aqueux et en (24) une phase organique enrichie. Cette phase alimente une unité de régénération (25) à un seul étage où elle est mise en contact avec une solution aqueuse (26) titrant 51 % de $P_2O_5$ et 6 % de HF, à 50 °C dans un rapport volumique phase organique/phase aqueuse de 5/1.

Après séparation des phases, la phase organique épuisée (27) alimente à nouveau la batterie d'extraction (22) tandis que la phase aqueuse (28) contenant un précipité est envoyée dans une unité de filtration (29) d'où l'on récupère un précipité (30) de sels d'$U_{IV}$, TR, Y, Th qui constitue la production et un filtrat (31) qui pour sa plus grande partie après recharge en $P_2O_5$ et HF pour revenir aux titres précités alimente à nouveau l'unité de réextraction (25). La fraction (28) non recyclée constitue une purge.

## Exemple 9

Cet exemple illustre au moyen de la figure 3 un mode de réalisation comportant le traitement d'un acide phosphorique brut contenant l'uranium sous les formes $U_{(IV)}$ et $U_{(VI)}$ et comportant également une réextraction réductrice en une seule étape. Un acide phosphorique brut de voie humide contenant :

| | |
|---|---|
| $P_2O_5$ | 29 % |
| Uranium total 150 mg/l | (dont $U_{(IV)} = 45$ mg/l et $U_{(VI)} = 105$ mg/l) |
| $TR_2O_3 + ThO_2$ 0,42 g/l | (dont $Y_2O_3 = 0,17$ g/l) |
| Fe total 9,1 g/l | (dont $Fe^{2+} = 0,2$ g/l) |

est introduit par la ligne (21) dans une batterie de 7 mélangeurs-décanteurs (22) à 40 °C, à contre-courant d'une phase organique (27) identique à celle de l'exemple 1, avec un rapport volumique de phase égal à 1. Il sort en (24) une phase organique enrichie et en (23) un acide phosphorique brut épuisé. La phase organique alimente une unité (25) de réextraction à un seul étage où elle est mise en contact avec une solution aqueuse (26) titrant 48 % de $P_2O_5$, 6 % de HF et contenant des ions réducteurs $Fe^{2+}$ à la concentration 4 g/l, dans un rapport volumique de phase organique/aqueuse de 10/1. Après séparation des phases, la phase organique épuisée (27) contient moins de 5 mg/l de chacun des éléments uranium, thorium, terres rares, yttrium ; elle alimente à nouveau la batterie d'extraction (22). La phase aqueuse (28) contenant un précipité en suspension est envoyée dans l'unité de séparation (29) d'où l'on récupère un précipité des sels d'$U_{IV}$, TR, Y, Th qui constitue la production. Le filtrat (31) est pour sa plus grande partie recyclé par (26) en (25) après ajustement des concentrations en HF, $P_2O_5$, $Fe^{2+}$, une partie de la solution (31) étant soutirée par la purge (32).

Au cours de cette mise en œuvre, nous avons pu constater qu'après 20 recyclages successifs le solvant (27) n'a subi aucune variation de son titre en particulier en DOPPA ni aucune perte de pouvoir extractant vis-à-vis des éléments recherchés.

## Exemple 10

Cet exemple illustre le procédé complet appliqué à un acide phosphorique brut de voie humide et comportant le perfectionnement de récupération des acides fluorhydrique et phosphorique entraînés dans la phase organique. Se référer à la figure 4 ci-jointe.

On introduit par (41) un acide phosphorique brut de voie humide dont la composition suit :

| | |
|---|---|
| $P_2O_5$ | 30 % |
| U VI | 100 g/m³ |
| $TR_2O_3 + ThO_2$ | 400 g/m³ (dont $Y_2O_3$ : 150 g/m³) |
| Fer total | 9 kg/m³ (essentiellement sous forme Fe III) |

dans une batterie de mélangeurs-décanteurs (42) comportant cinq étages maintenue à 40 °C sous un débit de 1 m³/heure. On y introduit à contre-courant par (50) une phase organique comme il sera expliqué ci-après et contenant :

| | |
|---|---|
| Acide di-(octylphényl) phosphorique | 23 % |
| Oxyde de trioctylphosphine | 5 % |
| Solvesso 150 (hydrocarbures aromatiques marque commerciale EXXON) | 36 % |
| Kérosène | 36 % |
| $P_2O_5$ | 3 kg/m³ |
| HF | 0,25 kg/m³ |
| Fer | 1,87 kg/m³ |

sous un débit de 1 m³/heure.

On recueille en sortie de batterie une phase organique (44) chargée en espèces recherchées et contenant en plus :

| | |
|---|---|
| HF | 0,25 kg/m³ |
| $P_2O_5$ | 3 kg/m³ |
| Fer | 1,95 kg/m³ |

et un raffinat aqueux (43) épuisé contenant :

| | |
|---|---|
| Uranium | 5 g/m³ |
| $TR_2O_3$ | 50 g/m³ |

(essentiellement $La_2O_3$).

La phase organique précédente est mise en contact dans le mélangeur-décanteur (45) avec la phase aqueuse (46), recyclée comme il sera expliqué ci-après, et contenant :

| | |
|---|---|
| $P_2O_5$ | 52,7 % |
| HF | 6,25 % |
| Fer total | 65 kg/m³ |
| dont fer II | 225 g/m³ |
| Uranium | 200 g/m³ |
| Oxydes de terres rares | 100 g/m³ |

le rapport des débits de la phase organique à la phase aqueuse étant de 5.

La phase aqueuse sortant (52) qui contient le précipité d'uranium IV, terres rares, thorium et yttrium présente une concentration en $P_2O_5$ de 50 %, en HF de 6 % et en ions fer III de 65 kg/m³.

La suspension aqueuse précédente est filtrée en (53), le gâteau de filtration (54) est lavé en (55) au moyen d'un courant d'eau d'un débit de 0,01 m³/heure, puis essoré. On obtient un résidu constituant une production de 5,3 kg/heure et une eau-mère de débit 0,01 m³/heure contenant :

| | |
|---|---|
| $P_2O_5$ | 10 % |
| HF | 1,2 % |
| Fer | 13 kg/m³ |

La phase organique épuisée (47) sortant de l'appareil d'extraction (45) contient :

| | |
|---|---|
| $P_2O_5$ | 11 kg/m³ |
| HF | 1 kg/m³ |
| Fer | 2 kg/m³ |

On l'introduit dans la zone de lavage (48) comportant un seul étage où elle est lavée à contre-courant au moyen d'un débit d'eau (49) de 0,022 m³/heure, le rapport des phases étant de 45.

A la sortie de la zone de lavage (48) on recueille un courant organique (50) contenant :

| | |
|---|---|
| $P_2O_5$ | 3 kg/m³ |
| HF | 0,25 kg/m³ |
| Fer | 1,87 kg/m³ |

qui est recyclé à l'extraction et un courant aqueux (51) contenant :

| | |
|---|---|
| $P_2O_5$ | 26 % |
| HF | 2,5 % |
| Fer (III) | 5 kg/m³ |

11

0 026 132

On réunit le courant précédent au courant (59) sortant de la zone de filtration (53) pour former le courant (60) lequel est concentré en (61, 62) par évaporation de 21 kg/heure d'eau. Le courant (64) résultant reçoit ensuite :

Fer                     0,05 kg/heure
HF                      0,45 kg/heure
$H_2O$                   0,19 kg/heure

pour constituer le courant (46) de recyclage à la batterie de réextraction (45).

Le bilan des acides nécessaires à la réextraction comparativement à un procédé ne mettant pas en œuvre le procédé de la présente invention s'établit comme suit :

| Pertes en $kg/m^3$ par la phase organique | Selon l'invention | Comparatif |
|---|---|---|
| $P_2O_5$ | < 0,1 | 8 à 10 |
| HF | < 0,25 | 0,75 à 1 |

Les exemples suivants 11 à 14 sont relatifs à l'application du procédé à un raffinat aqueux provenant de l'extraction de l'acide phosphorique brut au moyen d'un solvant insoluble.

Exemple 11

On dispose d'un raffinat aqueux provenant de l'extraction par le phosphate de tributyle d'un acide phosphorique brut de voie humide obtenu par attaque sulfurique d'une apatite du Togo avec introduction d'acide sulfurique dans la batterie d'extraction selon l'enseignement et le mode opératoire de l'exemple du brevet français n° 1.531.487. Sa composition pondérale est la suivante :

| | |
|---|---|
| $P_2O_5$ | 3,5 % |
| $H_2SO_4$ | 12,2 % |
| $Fe_2O_3$ | 15,9 g/litre |
| $Al_2O_3$ | 20,4 g/litre |
| MgO | 10,6 g/litre |
| $Na_2O$ | 16,8 g/litre |
| U (VI) | 203 mg/litre |
| $TR_2O_3$ | 74 mg/litre |
| $Y_2O_3$ | 88 mg/litre |
| $ThO_2$ | environ 0,5 mg/litre |

Le raffinat précédent est extrait par une phase organique dont la composition pondérale suit :

| | |
|---|---|
| Acide di(octylphényl) phosphorique | 23 % |
| Oxyde de trioctylphosphine | 5 % |
| Kérosène | 36 % |
| Solvesso 150 (mélange d'hydrocarbures aromatiques) marque commerciale de la Société EXXON) | 36 % |

à 30 °C, au moyen d'un extracteur à étage unique. On donne dans le tableau ci-après les rendements d'extraction de l'uranium (VI) et de l'yttrium.

12

## 0 026 132

| Rapport de phase A/O | Rendement d'extraction de l'uranium (%) | Rendement d'extraction de l'yttrium (%) |
|---|---|---|
| 1 | 98 | 95 |
| 2 | 95 | 89 |
| 5 | 87 | 78 |

### Exemple 12

On dispose du raffinat aqueux de l'exemple 10. On effectue l'extraction par le solvant de l'exemple 10 à contre-courant des phases dans une batterie de mélangeurs-décanteurs à quatre étages théoriques, maintenue à 40 °C dans un rapport de débit phase organique/phase aqueuse de 1,2. Il sort de la batterie une phase aqueuse épuisée contenant moins de 10 mg/litre d'uranium, de terres rares, d'yttrium et de thorium. La phase organique enrichie contient :

| | | |
|---|---|---|
| U (VI) | | 165 mg/l |
| $TR_2O_3$ | | 57 mg/l |
| $Y_2O_3$ | | 73 mg/l |
| $ThO_2$ | environ | 0,4 mg/l |

Ensuite la phase organique est mise en contact avec une solution aqueuse contenant $P_2O_5$ : 56 % ; HF : 6,5 % et $Fe^{2+}$ : 1,5 g/litre dans un mélangeur-décanteur, à 40 °C dans un rapport de débit de phase organique/phase aqueuse de 5. Il se forme un précipité vert qui est entraîné par la phase aqueuse puis séparé par centrifugation. La phase organique épuisée contient moins de 10 mg/litre d'uranium, terres rares, yttrium et thorium. Par litre de solvant on récupère 0,35 g de précipité sec de fluorure d'uranium (IV), terres rares, yttrium et thorium, ce qui correspond à un rendement global de récupération sur le raffinat de 95 % de l'uranium, des terres rares, yttrium et thorium.

### Exemple 13

On dispose d'un raffinat aqueux provenant de l'extraction par le phosphate de tributyle d'un acide phosphorique brut de voie humide obtenu par attaque sulfurique d'une apatite du TOGO, sans introduction d'acide sulfurique supplémentaire dans la batterie d'extraction.
Sa composition est la suivante :

| | |
|---|---|
| $P_2O_5$ | 15 % |
| $H_2SO_4$ | 4 % |
| $Fe_2O_3$ | 16 g/l |
| $Al_2O_3$ | 20 g/l |
| MgO | 11 g/l |
| $Na_2O$ | 17 g/l |
| U (VI) | 215 mg/l |
| $TR_2O_3$ | 75 mg/l |
| $Y_2O_3$ | 90 mg/l |

Le raffinat précédent est extrait par la phase organique de l'exemple 10, à contre-courant des phases dans une batterie de mélangeurs-décanteurs à quatre étages théoriques, maintenue à 40 °C dans un rapport de débits phase organique/phase aqueuse égal à 1. Il sort de l'extracteur une phase aqueuse épuisée contenant moins de 20 mg/l d'uranium, de terres rares, d'yttrium et de thorium et une phase organique chargée contenant : U = 210 mg/l ; $TR_2O_3$ = 70 mg/l et $Y_2O_3$ = 87 mg/l soit un taux d'extraction moyen supérieur à 90 %. Cette phase organique est réextraite comme dans l'exemple 2 par une solution contenant $P_2O_5$ = 56 % ; HF = 6,5 % et $Fe^{2+}$ = 1,5 g/l.

### Exemple 14

On considère le raffinat aqueux de l'exemple 13. On effectue sa réduction préalable sur un lit de grenaille de fer de façon à réduire à la fois le fer (III) en fer (II) et l'uranium (VI) en uranium (IV).
On procède alors à l'extraction dans un rapport de phase O/A = 1/5 sur cinq étages avec le solvant de l'exemple 10. On obtient une phase organique contenant U = 1,07 g/l ; $TR_2O_3$ = 0,37 g/l et $Y_2O_3$ = 0,45 g/l

que l'on réextrait dans un rapport de phase A/O égal à 1/5 avec une solution contenant $P_2O_5 = 50\%$ et $HF = 7\%$ pour obtenir après centrifugation un précipité de fluorures des espèces précitées et une phase organique contenant moins de 10 mg/l de chacun des éléments ce qui correspond à un taux de récupération supérieur à 98% pour l'uranium, à 96% pour l'yttrium et à 95% pour les terres rares.

Les exemples suivants 15 à 19 sont relatifs à l'application du procédé de l'invention à une solution aqueuse acide provenant du traitement d'un phosphogypse résiduaire.

## Exemple 15

On dispose d'un phosphogypse résiduaire provenant de l'attaque d'une apatite par l'acide sulfurique, suivie d'une filtration, contenant 0,36% d'oxydes de terres rares ($TR_2O_3$) y compris l'yttrium et d'oxyde de thorium ($ThO_2$).

Le phosphogypse est mis en contact sous agitation pendant une heure à 25°C avec une solution d'acide sulfurique 2,3 M dans un rapport pondéral liquide/solide de 4. Après séparation du gypse par filtration et essorage, on met à nouveau en contact la solution résultante et une nouvelle charge de phosphogypse frais dans les mêmes conditions que précédemment. Cette opération de mise en contact est réalisée au total cinq fois avec une même solution enrichie titrant : $H_2SO_4 = 1,6$ M ; $H_3PO_4 = 0,8$ M ; $TR_2O_3 + ThO_2 + 2,1$ g/litre. Le rendement de récupération en terres rares et thorium correspond sensiblement à 40% par rapport au phosphogypse initial.

On met en contact la solution précédente avec une phase organique titrant :

| | |
|---|---|
| Acide di-(octylphényl) phosphorique | 0,5  M/litre |
| Oxyde de trioctylphosphine | 0,12 M/litre |

Solvant : mélange équipondéral de kérosène et de Solvesso 150 (marque commerciale de la Société EXXON) mélange d'hydrocarbures aromatiques à contre-courant dans une batterie de mélangeurs-décanteurs à 5 étages théoriques, maintenue à 25°C dans un rapport des débits de phase organique/phase aqueuse de 1. Le raffinat aqueux recueilli en sortie d'extracteur contient moins de 100 mg/litre d'oxydes de terres rares, yttrium, thorium, ce qui correspond à un rendement d'extraction dans la phase organique de plus de 95% des terres rares, yttrium et thorium.

La solution organique enrichie est ensuite réextraite sur un mélangeur-décanteur à un étage au moyen d'une solution d'acide phosphorique à 52% de $P_2O_5$, contenant 6% d'acide fluorhydrique, le rapport des débits de phase organique/phase aqueuse étant de 5. Par litre de phase organique traitée, on obtient la formation d'un précipité vert contenant les terres rares, l'yttrium et le thorium que l'on sépare et sèche pour obtenir 2,4 g de produit. La phase organique sortant de l'appareil de réextraction contient moins de 10 mg/litre de terres rares, yttrium et thorium, ce qui correspond à un taux de récupération global supérieur à 38% sur le phosphogypse initial.

## Exemple 16

On dispose du phosphogypse résiduaire de l'exemple 15. Celui-ci est mis en contact sous agitation pendant une heure à 50°C avec une solution d'acide sulfurique 2,7 M puis on répète les opérations décrites dans l'exemple 1. On obtient 90 litres d'une solution enrichie titrant $H_2SO_4 = 2$ M, $H_3PO_4 = 0,8$ M, $TR_2O_3 + ThO_2 = 2,6$ g/litre. Le rendement de récupération en terres rares, thorium et yttrium correspond sensiblement à 50% par rapport au phosphogypse initial.

On met en contact la solution précédente avec la phase organique de l'exemple 15, à contre-courant, dans une batterie de mélangeurs-décanteurs à 8 étages théoriques, maintenue à 25°C dans un rapport de débits de phase organique/phase aqueuse égal à 1. Le raffinat aqueux recueilli en sortie d'extracteur contient 550 mg/l d'oxydes de terres rares, essentiellement d'oxydes de lanthane, de cérium, de praséodyme et de néodyme, ce qui correspond à un rendement d'extraction dans la phase organique de près de 80% des terres rares, yttrium et thorium solubilisés. Les terres rares, l'yttrium et le thorium sont ensuite réextraits de la phase organique dans les conditions de l'exemple 1.

## Exemple 17

On dispose du phosphogypse résiduaire de l'exemple 15. Celui-ci est mis en contact sous agitation pendant une heure à 50°C avec une solution d'acide sulfurique 1,8 M puis on répète les opérations décrites dans l'exemple 15. On obtient 90 litres d'une solution enrichie titrant $H_2SO_4 = 1$ M, $H_3PO_4 = 0,8$ M, $TR_2O_3 + ThO_2 = 2,1$ litre. Le rendement de récupération en terres rares, yttrium et thorium correspond sensiblement à 40% par rapport au phosphogypse initial.

On met en contact la solution précédente avec la phase organique de l'exemple 15, à contre-courant, dans une batterie de mélangeurs-décanteurs à 4 étages théoriques, maintenue à 25°C, dans un rapport de débits de phase organique/phase aqueuse égal à 0,2. Le raffinat aqueux recueilli en sortie d'extracteur contient 50 mg/l d'oxydes de terres rares, essentiellement d'oxyde de lanthane, ce qui correspond à un rendement d'extraction dans la phase organique de plus de 97 % des terres rares, yttrium et thorium que l'on réextrait sous forme de précipité de fluorure par le mélange HF 6 % = $H_3PO_4$ 52 % de $P_2O_5$.

## Exemple 18

On dispose de la solution enrichie de l'exemple 17 titrant : $H_2SO_4 = 1$ M ; $H_3PO_4 = 0,8$ M ; $TR_2O_3 + ThO_2 = 2,1$ g/litre.

On met en contact la solution précédente avec une phase organique de composition :

Acide di-(octylphényl) phosphorique : 0,5 M en solution dans le Solvesso 150,

à contre-courant dans une batterie de mélangeurs-décanteurs à 4 étages théoriques, maintenue à 25 °C, dans un rapport de débits de phase organique/phase aqueuse égal à 1. Le raffinat aqueux recueilli en sortie d'extraction contient 55 mg/litre d'oxydes de terres rares, ce qui correspond à un rendement d'extraction dans la phase organique de 97 % des terres rares, yttrium et thorium.

## Exemple 19

On dispose de la solution enrichie de l'exemple 17 titrant : $H_2SO_4 = 1$ M ; $H_3PO_4 = 0,8$ M ; $TR_2O_3 + ThO_2 = 2,1$ g/litre.

On met en contact la solution précédente avec une phase organique de compositions :

| | |
|---|---|
| Acide di-(octylphényl) phosphorique | 0,2 M/litre |
| Nonylphénol | 20 % |
| Kérosène qsp | 100 % |

à contre-courant dans une batterie de mélangeurs-décanteurs à 4 étages théoriques, maintenue à 25 °C dans un rapport de débits de phase organique/phase aqueuse égal à 1,25. Le raffinat aqueux recueilli en sortie d'extracteur contient 90 mg/litre d'oxydes de terres rares, ce qui correspond à un rendement d'extraction dans la phase organique de 95 % des terres rares, yttrium et thorium.


## Revendications

1. Procédé continu de récupération globale de l'uranium IV et/ou VI, du thorium, de l'yttrium et des terres rares contenus dans une phase aqueuse acide de départ qui est un acide phosphorique brut de voie humide ou bien qui a été obtenue soit à partir d'un phosphogypse résiduaire contenant les espèces métalliques précitées à l'état insoluble par traitement au moyen d'un acide minéral fort en solution aqueuse, soit en tant que raffinat aqueux de l'extraction aux solvants insolubles ou peu solubles à l'eau d'un acide phosphorique brut de voie humide, caractérisé en ce que l'on met en contact ladite solution aqueuse acide avec une phase organique homogène comprenant un acide di(alkylphényl) phosphorique exempt du dérivé mono(alkylphényl) phosphorique et un solvant organique inerte choisi parmi des hydrocarbures aliphatiques ou aromatiques, utilisés seuls ou en mélange, ce par quoi, en tant que résultat, après séparation des phases, on recueille une phase aqueuse substantiellement épuisée et une phase organique chargée en uranium, thorium, yttrium et terres rares.

2. Procédé selon la revendication 1, caractérisé en ce que le radical alkyle du groupe alkylphényle de l'acide di(alkylphényl) phosphorique est un radical aliphatique à chaîne droite ou ramifiée contenant de 4 à 12 atomes de carbone.

3. Procédé selon la revendication 1 ou 2, caractérisé en ce que le radical alkyle est le radical octyle.

4. Procédé selon la revendication 3, caractérisé en ce que le radical octyle est le radical 1,1,3,3 tétraméthylbutyle.

5. Procédé selon la revendication 4, caractérisé en ce que l'acide di-(alkylphényl) phosphorique est l'acide di-[4-(1,1,3,3 tétraméthylbutyl) phényl] phosphorique.

6. Procédé selon l'une quelconque des revendications précédentes, caractérisé en ce que le solvant inerte de la phase organique est choisi parmi des hydrocarbures aliphatiques comprenant l'heptane, l'hexane, le dodécane et des coupes pétrolières du type kérosène ; des hydrocarbures aromatiques comprenant le benzène, l'éthylbenzène, le toluène, le xylène et des coupes pétrolières aromatiques.

7. Procédé selon l'une quelconque des revendications précédentes, caractérisé en ce que le solvant inerte est un mélange d'hydrocarbures aliphatiques et d'hydrocarbures aromatiques dans un rapport pondéral allant de 100 à 0,01.

8. Procédé selon l'une quelconque des revendications précédentes, caractérisé en ce que la phase organique contient en outre un dérivé solvatant (modifieur) choisi parmi des oxydes de trialkylphosphine, des phosphinates d'alkyle, des phosphonates d'alkyle, des phosphates d'alkyle, et des alkylsulfoxydes.

9. Procédé selon la revendication 8, caractérisé en ce que la teneur pondérale en agent solvatant dans la phase organique est comprise entre 1 et 30 %, de préférence voisine de 5 %.

10. Procédé selon l'une quelconque des revendications précédentes, caractérisé en ce qu'en plus la phase organique contient un agent de modification choisi parmi des composés hydroxylés aliphatiques ou alkylaryliques contenant plus de 4 atomes de carbone.

11. Procédé selon la revendication 10, caractérisé en ce que l'agent de modification est un alkylphénol présent à une concentration comprise entre 5 et 50 %, de préférence voisine de 20 %.

12. Procédé selon la revendication 10 ou 11, caractérisé en ce que l'alkylphénol est le nonylphénol.

13. Procédé selon l'une quelconque des revendications précédentes, caractérisé en ce que la concentration en acide di-(alkylphényl) phosphorique dans la phase organique est comprise entre 0,1 M et 1 M, de préférence voisine de 0,5 M.

14. Procédé selon la revendication 13, caractérisé en ce que la phase organique présente un rapport pondéral hydrocarbure aromatique/aliphatique de 1.

15. Procédé selon l'une quelconque des revendications précédentes, caractérisé en ce qu'en plus la phase organique, après extraction et séparation, est soumise à une réextraction par contact au moyen d'une phase aqueuse comprenant de l'acide fluorhydrique dissous dans un acide minéral fort, ce par quoi, l'on recueille dans la phase aqueuse de réextraction, un précipité contenant l'uranium, le thorium, les terres rares et l'yttrium, sous forme de sels que l'on sépare la phase organique épuisée étant recyclée à l'extraction.

16. Procédé selon la revendication 15, caractérisé en ce que l'acide minéral fort est choisi parmi l'acide phosphorique et l'acide sulfurique.

17. Procédé selon la revendication 15 ou 16, caractérisé en ce que la teneur pondérale en acide fluorhydrique de la phase aqueuse de réextraction est comprise entre 3 et 10 % et en ce que la teneur en acide phosphorique est comprise entre 30 et 60 % exprimée en $P_2O_5$, de préférence entre 45 et 55 %.

18. Procédé selon l'une quelconque des revendications 15 à 17, appliqué à une phase aqueuse acide de départ contenant l'uranium en totalité ou en partie au degré d'oxydation six, caractérisé en ce que la phase aqueuse de réextraction, outre l'acide fluorhydrique et l'acide minéral fort contient un agent réducteur pour l'uranium, de préférence des ions fer II, ce par quoi l'on recueille dans la phase aqueuse de réextraction un précipité de sels contenant l'uranium au degré d'oxydation quatre, que l'on sépare.

19. Procédé selon l'une quelconque des revendications 15 à 17, appliqué à une phase aqueuse acide de départ contenant l'uranium au degré d'oxydation six, ou bien six et/ou quatre, caractérisé en ce qu'en plus, après réextraction par une solution aqueuse d'acide fluorhydrique et d'acide phosphorique et séparation, la phase organique résultante est soumise à une deuxième réextraction au moyen d'une solution aqueuse d'acide fluorhydrique et d'acide phosphorique, contenant des ions fer II, ce par quoi l'on précipite l'uranium restant dans ladite phase organique sous forme d'un précipité de sel d'$U_{IV}$ dans la phase aqueuse, que l'on sépare.

20. Procédé selon l'une quelconque des revendications précédentes, caractérisé en ce que la température de mise en œuvre est comprise entre 15 et 60 °C, de préférence voisine de 40 °C.

21. Procédé selon l'une quelconque des revendications précédentes, caractérisé en ce que l'acide minéral fort utilisé pour le traitement du phosphogypse résiduaire pour l'obtention de la phase aqueuse acide de départ est choisi parmi les acides sulfurique, chlorhydrique et nitrique, de préférence l'acide sulfurique.

22. Procédé selon la revendication 21, utilisant comme acide minéral fort l'acide sulfurique, caractérisé en ce que la solution aqueuse de traitement du phosphogypse présente une concentration comprise entre 0,5 et 3 M.

23. Procédé selon l'une quelconque des revendications 1 à 20, caractérisé en ce que le raffinat aqueux constituant la phase aqueuse acide de départ provient de l'extraction de l'acide phosphorique de voie humide au moyen d'un phosphate d'alkyle ou d'un alcool aliphatique substantiellement insoluble dans l'eau.

24. Procédé selon la revendication 23, caractérisé en ce que le raffinat aqueux présente une teneur en $P_2O_5$ comprise entre 1 et 20 %, de préférence voisine de 10 % et une teneur en $H_2SO_4$ comprise entre 1 et 15 %.

25. Procédé selon l'une quelconque des revendications 15 à 24, caractérisé en ce que, après réextraction des espèces et séparation des phases aqueuse et organique, la phase organique épuisée en espèces métalliques, préalablement à son recyclage dans la zone d'extraction de la solution acide initiale, est soumise à un traitement dans une zone de lavage au moyen d'une solution aqueuse, ce par quoi l'on récupère une phase organique substantiellement épuisée en acides fluorhydrique et phosphorique, et une solution aqueuse de lavage enrichie, laquelle est réunie à la solution aqueuse de réextraction après séparation du précipité des espèces métalliques et avant son recyclage à la zone de réextraction.

26. Procédé selon la revendication 25, caractérisé en ce que ladite solution aqueuse de lavage est choisie parmi l'eau ou une solution d'acide phosphorique avec la restriction que sa teneur en acide phosphorique soit inférieure à celle de la solution aqueuse de réextraction à son entrée dans la zone de réextraction.

27. Procédé selon la revendication 25 ou 26, caractérisé en ce que le lavage s'effectue dans une zone de lavage comportant au moins un étage et en ce que le rapport du débit de la phase organique à celui de la solution aqueuse est compris entre 10 et 100, de préférence voisin de 45.

28. Procédé selon l'une quelconque des revendications 25 à 27, caractérisé en ce que, après réunion de la solution de lavage enrichie et de la solution aqueuse de réextraction, le courant réuni est soumis à une concentration par évaporation, ce par quoi l'on recueille un condensat d'eau et d'acide fluorhydrique qui est réuni au courant aqueux sortant de l'évaporateur et un condensat d'eau qui est éliminé.

29. Procédé selon l'une quelconque des revendications 25 à 28, caractérisé en ce que, en plus, la solution aqueuse sortant de l'évaporateur est réajustée en ses titres en HF et, le cas échéant, en agent réducteur avant d'être réintroduite à la zone de réextraction.

30. Procédé selon l'une quelconque des revendications 25 à 29, caractérisé en ce qu'en plus le précipité des espèces métalliques après séparation est lavé au moyen d'un courant d'eau puis séparé et en ce que l'eau-mère de lavage alimente la zone d'extraction conjointement à la solution aqueuse acide initiale.

## Claims.

1. A continuous process for the total recovery of uranium IV and/or VI, thorium, yttrium and rare earths contained in an acid aqueous starting phase which is a crude wet-process phosphoric acid or else which was produced either from a residual phosphogypsum containing said metal species in an insoluble state by treatment by means of a strong inorganic acid in aqueous solution, or as an aqueous raffinate from extraction with water-insoluble or weakly water-soluble solvents of a crude wet-process phosphoric acid, characterised in that said acid aqueous solution is brought into contact with a homogenous organic phase comprising a di-(alkylphenyl) phosphoric acid which is free from mono-(alkylphenyl) phosphoric derivative and an inert organic solvent selected from aliphatic or aromatic hydrocarbons used alone or in the form of a mixture, whereby, as the result, after separation of the phases, there are collected a substantially exhausted aqueous phase and an organic phase charged with uranium, thorium, yttrium and rare earths.

2. A process according to claim 1, characterised in that the alkyl radical of the alkylphenyl group of di-(alkylphenyl) phosphoric acid is a branched or straight-chain aliphatic radical containing from 4 to 12 carbon atoms.

3. A process according to claim 1 or claim 2, characterised in that the alkyl radical is the octyl radical.

4. A process according to claim 3, characterised in that the octyl radical is 1,1,3,3-tetramethylbutyl.

5. A process according to claim 4, characterised in that the di-(alkylphenyl) phosphoric acid is di-[4-(1,1,3,3-tetramethylbutyl) phenyl] phosphoric acid.

6. A process according to any one of the preceding claims characterised in that the inert solvent of the organic phase is selected from aliphatic hydrocarbons comprising heptane, hexane, dodecane and petroleum cuts of the kerosene type ; and aromatic hydrocarbons comprising benzene, ethylbenzene, toluene, xylene and aromatic petroleum cuts.

7. A process according to any of the preceding claims, characterised in that the inert solvent is a mixture of aliphatic hydrocarbons and aromatic hydrocarbons in a ratio by weight ranging from 100 to 0.01.

8. A process according to any one of the preceding claims, characterised in that the organic phase further contains a solvating derivative (modifier) which is selected from trialkylphosphine oxides, alkyl phosphinates, alkyl phosphonates, alkyl phosphates and alkyl sulphoxides.

9. A process according to claim 8, characterised in that the proportion by weight of solvating agent in the organic phase is from 1 to 30 %, preferably close to 5 %.

10. A process according to any one of the preceding claims, characterised in that in addition the organic phase contains a modifying agent selected from aliphatic or alkylaryl hydroxyl compounds containing more than 4 carbon atoms.

11. A process according to claim 10, characterised in that the modifying agent is an alkyl phenol present in a concentration of from 5 to 50 % and preferably close to 20 %.

12. A process according to claim 10 or claim 11, characterised in that the alkyl phenol is nonyl phenol.

13. A process according to any one of the preceding claims, characterised in that the concentration of di-(alkylphenyl) phosphoric acid in the organic phase is from 0.1 M to 1 M, preferably close to 0.5 M.

14. A process according to claim 13, characterised in that the organic phase has an aromatic/aliphatic hydrocarbon ratio by weight of 1.

15. A process according to any one of the preceding claims, characterised in that in addition the organic phase, after extraction and separation, is subjected to re-extraction by contact by means of an aqueous phase comprising hydrofluoric acid dissolved in a strong inorganic acid, whereby there is collected in the aqueous re-extraction phase a precipitate containing uranium, thorium, rare earths and yttrium, in the form of salts which are separated, the exhausted organic phase being recycled to the extraction step.

16. A process according to claim 15, characterised in that the strong inorganic acid is selected from phosphoric acid and sulphuric acid.

17. A process according to claim 15 or claim 16, characterised in that the proportion by weight of hydrofluoric acid in the aqueous re-extraction phase from 3 to 10 % and that the proportion of phosphoric acid is from 30 to 60 % expressed as $P_2O_5$, preferably from 45 to 55 %.

18. A process according to any one of claims 15 to 17 when applied to an acid aqueous starting phase containing uranium that is totally or partly in a degree of oxidation of 6, characterised in that the aqueous re-extraction phase, besides hydrofluoric acid and the strong inorganic acid, contains a reducing agent for uranium, preferably iron II ions, whereby there is collected in the aqueous re-extraction phase a precipitate of salts containing uranium in a degree of oxidation of four, which is separated.

19. A process according to any one of claims 15 to 17 when applied to an acid aqueous starting phase containing uranium in a degree of oxidation of six or six and/or four, characterised in that in addition, after re-extraction by an aqueous solution of hydrofluoric acid and phosphoric acid and separation, the resulting organic phase is subjected to a second re-extraction step by means of an aqueous solution of hydrofluoric acid and phosphoric acid containing iron II ions, thereby precipitating the remaining uranium in said organic phase in the form of a precipitate of $U_{IV}$ salt in the aqueous phase, which is separated.

20. A process according to any one of the preceding claims, characterised in that the operating temperature is from 15 to 60 °C, preferably close to 40 °C.

21. A process according to any one of the preceding claims, characterised in that the strong inorganic acid used for treating the residual phosphogypsum for producing the acid aqueous starting phase is selected from sulphuric, hydrochloric and nitric acids, preferably sulphuric acid.

22. A process according to claim 21 which uses sulphuric acid as the strong inorganic acid, characterised in that the aqueous solution for treatment of the phosphogypsum is of a concentration of from 0.5 to 3 M.

23. A process according to any one of claims 1 to 20, characterised in that the aqueous raffinate forming the acid aqueous starting phase results from extraction of the wet-process phosphoric acid by means of an alkyl phosphate or an aliphatic alcohol which is substantially insoluble in water.

24. A process according to claim 23, characterised in that the aqueous raffinate has a content of $P_2O_5$ of from 1 to 20 %, preferably close to 10 %, and a content of $H_2SO_4$ of from 1 to 15 %.

25. A process according to any one of claims 15 to 24, characterised in that, after re-extraction of the species and separation of the aqueous and organic phases, the organic phase which is exhausted in respect of metal species, prior to being recycled to the zone for extraction of the initial acid solution, is subjected to a treatment in a washing zone by means of an aqueous solution, thereby recovering an organic phase which is substantially exhausted in respect of hydrofluoric and phosphoric acids, and an enriched aqueous washing solution which is combined with the aqueous re-extraction solution after separation of the precipitate of the metal species and before recycling thereof to the re-extraction zone.

26. A process according to claim 25, characterised in that said aqueous washing solution is selected from water of a solution of phosphoric acid with the restriction that the phosphoric acid content thereof is less than that of the aqueous re-extraction solution at its entry into the re-extraction zone.

27. A process according to claim 25 or claim 26, characterised in that the washing operation is carried out in a washing zone comprising at least one stage and that the ratio between the flow rate of the organic phase and that of the aqueous solution is from 10 to 100, preferably close to 45.

28. A process according to any one of claims 25 to 27, characterised in that, after the enriched washing solution and the aqueous re-extraction solution are combined, the combined flow is subjected to concentration by evaporation, thereby collecting a condensate of water and hydrofluoric acid, which is combined with the aqueous flow issuing from the evaporator, and a water condensate, which is removed.

29. A process according to any one of claims 25 to 28, characterised in that in addition the aqueous solution issuing from the evaporator is re-adjusted in respect of its strengths in respect of HF and if appropriate reducing agent, before being re-introduced into the re-extraction zone.

30. A process according to any one of claims 25 to 29, characterised in that in addition the precipitate of the metal species after separation is washed by means of a flow of water and then separated and that the washing mother liquor feeds the extraction zone jointly with the initial acid aqueous solution.

**Ansprüche**

1. Kontinuierliches Verfahren zur gesamten Rückgewinnung von Uran-IV und/oder VI, Thorium, Yttrium und seltenen Erden, die in einer wässrigen sauren Ausgangsphase enthalten sind, die eine rohe Naßphosphorsäure ist, oder die entweder aus einem, die vorgenannten Metalle in unlöslicher Form enthaltenden Rest-Phosphogips durch Behandlung mit einer starken Mineralsäure in wässriger Lösung oder als wässriges Raffinat der Extraktion einer rohen Naßphosphorsäure mit in Wasser wenig oder unlöslichen Lösungsmitteln erhalten wurde, dadurch gekennzeichnet, daß man die genannte wässrige saure Lösung mit einer homogenen organischen Phase in Berührung bringt, die eine von dem Mono-(alkylphenyl) phosphat-Derivat freie Di-(alkylphenyl) phosphorsäure und ein inertes organisches Lösungsmittel enthält, das unter den aliphatischen oder aromatischen Kohlenwasserstoffen, die allein oder im Gemisch verwendet werden, ausgewählt ist, wodurch man als Ergebnis nach der Trennung der Phasen

18

eine im wesentlichen erschöpfte wässrige Phase und eine mit Uran, Thorium, Yttrium und seltenen Erden beladene organische Phase gewinnt.

2. Verfahren nach Anspruch 1, dadurch gekennzeichnet, daß der Alkylrest der Alkylphenylgruppe der Di-(alkylphenyl) phosphorsäure ein geradkettiger oder verzweigter aliphatischer Rest mit 4 bis 12 Kohlenstoffatomen ist.

3. Verfahren nach Anspruch 1 oder 2, dadurch gekennzeichnet, daß der Alkylrest der Octylrest ist.

4. Verfahren nach Anspruch 3, dadurch gekennzeichnet, daß der Octylrest der 1,1,3,3-Tetramethylbutylrest ist.

5. Verfahren nach Anspruch 4, dadurch gekennzeichnet, daß die Di-(alkylphenyl) phosphorsäure die Di-[4-(1,1,3,3-tetramethylbutyl) phenyl] phosphorsäure ist.

6. Verfahren nach irgendeinem der vorangehenden Ansprüche, dadurch gekennzeichnet, daß das inerte Lösungsmittel der organischen Phase aus den aliphatischen Kohlenwasserstoffen, enthaltend Heptan, Hexan, Dodecan und Erdölfraktionen vom Kerosin-Typ oder aromatischen Kohlenwasserstoffen enthaltend Benzol, Äthylbenzol, Toluol, Xylol und aromatische Erdölfraktionen ausgewählt ist.

7. Verfahren nach irgendeinem der vorangehenden Ansprüche, dadurch gekennzeichnet, daß das inerte Lösungsmittel ein Gemisch von aliphatischen und aromatischen Kohlenwasserstoffen in einem Gewichtsverhältnis von 100 bis 0,01 ist.

8. Verfahren nach irgendeinem der vorangehenden Ansprüche, dadurch gekennzeichnet, daß die organische Phase außerdem ein Solvatisierungsmittel (Regler) enthält, das unter Trialkylphosphinoxiden, Alkylphosphinaten, Alkylphosphonaten, Alkylphosphaten und Alkylsulfoxiden ausgewählt ist.

9. Verfahren nach Anspruch 8, dadurch gekennzeichnet, daß der Gehalt des Solvatisierungsmittels in der organischen Phase zwischen 1 und 30 Gewichtsprozent, vorzugsweise um 5 Gewichtsprozent beträgt.

10. Verfahren nach irgendeinem der vorangehenden Ansprüche, dadurch gekennzeichnet, daß die organische Phase zusätzlich ein Modifizierungsmittel enthält, das unter aliphatischen oder Alkylaryl-Hydroxylverbindungen mit mehr als 4 Kohlenstoffatomen ausgewählt ist.

11. Verfahren nach Anspruch 10, dadurch gekennzeichnet, daß das Modifizierungsmittel ein in einer Konzentration zwischen 5 und 50, vorzugsweise um 20 % vorliegendes Alkylphenol ist.

12. Verfahren nach Anspruch 10 oder 11, dadurch gekennzeichnet, daß das Alkylphenol Nonylphenol ist.

13. Verfahren nach irgendeinem der vorangehenden Ansprüche, dadurch gekennzeichnet, daß die Konzentration der Di-(alkylphenyl) phosphorsäure in der organischen Phase 0,1 M bis 1 M, vorzugsweise um 0,5 M beträgt.

14. Verfahren nach Anspruch 13, dadurch gekennzeichnet, daß die organische Phase ein Gewichtsverhältnis von aromatischen : aliphatischen Kohlenwasserstoffen von 1 aufweist.

15. Verfahren nach einem der vorangehenden Ansprüche, dadurch gekennzeichnet, daß die organischen Phase nach der Extraktion und Abtrennung zusätzlich einer Wiederextraktion durch in Berührung bringen mit einer wässrigen Phase unterworfen wird, die Fluorwasserstoffsäure gelöst in einer starken Mineralsäure enthält, wodurch man in der wässrigen Phase der Wiederextraktion eine das Uran, das Thorium, die seltenen Erden und das Yttrium enthaltene Fällung in Form von Salzen gewinnt, die man von der erschöpften organischen Phase abtrennt, die ihrerseits in die Extraktion zurückgeführt wird.

16. Verfahren nach Anspruch 15, dadurch gekennzeichnet, daß die starke Mineralsäure unter Phosphorsäure und Schwefelsäure ausgewählt wird.

17. Verfahren nach Anspruch 15 oder 16, dadurch gekennzeichnet, daß der Fluorwasserstoffsäuregehalt in der wässrigen Phase der Reextraktion 3 bis 10 Gewichtsprozent und daß der Phosphorsäuregehalt, berechnet als $P_2O_5$, 30 bis 60 Gewichtsprozent, vorzugsweise 45 bis 55 Gewichtsprozent beträgt.

18. Verfahren nach irgendeinem der Ansprüche 15 bis 17, in der Anwendung auf eine wässrige, saure Ausgangsphase, die Uran ganz oder teilweise in der sechswertigen Oxydationsstufe enthält, dadurch gekennzeichnet, daß die wässrige Reextraktionsphase außer der Fluorwasserstoffsäure und der starken Mineralsäure ein Reduktionsmittel für Uran, vorzugsweise Eisen-II-Ionen enthält, wodurch man in der wässrigen Phase der Reextraktion einen Niederschlag von Salzen erhält, die Uran in der vierwertigen Oxydationsstufe enthalten, den man abtrennt.

19. Verfahren nach irgendeinem der Ansprüche 15 bis 17 in der Anwendung auf eine wässrige, saure Ausgangsphase, die Uran in der sechswertigen oder auch der sechs- und/oder vierwertigen Oxydationsstufe enthält, dadurch gekennzeichnet, daß die nach der Reextraktion mit einer wässrigen Lösung von Flußsäure und Phosphorsäure und Abtrennung erhaltene organische Phase einer zweiten Reextraktion mit Hilfe einer wässrigen Lösung von Flußsäure und Phosphorsäure unterworfen wird, die Eisen-II-Ionen enthält, wodurch man das in der genannten organischen Phase verbliebene Uran als Niederschlag von $U_{IV}$-Salz in der wässrigen Phase fällt und abtrennt.

20. Verfahren nach irgendeinem der vorangehenden Ansprüche, dadurch gekennzeichnet, daß die angewendete Temperatur zwischen 15 und 60 °C, vorzugsweise um 40 °C liegt.

21. Verfahren nach irgendeinem der vorangehenden Ansprüche, dadurch gekennzeichnet, daß die für die Behandlung des Rest-Phosphogipses verwendete starke Mineralsäure zur Herstellung der wässrigen sauren Ausgangsphase unter Schwefelsäure, Salzsäure und Salpetersäure, vorzugsweise Schwefelsäure ausgewählt ist.

22. Verfahren nach Anspruch 21, wobei als starke Mineralsäure Schwefelsäure verwendet wird, dadurch gekennzeichnet, daß die wässrige Lösung der Behandlung des Phosphgipses eine Konzentration von 0,5 bis 3 M besitzt.

23. Verfahren nach irgendeinem der Ansprüche 1 bis 20, dadurch gekennzeichnet, daß das die wässrige, saure Ausgangsphase darstellende Raffinat aus der Extraktion von Naßphosphorsäure mit einem Alkylphosphat oder einem in Wasser im wesentlichen unlöslichen aliphatischen Alkohol stammt.

24. Verfahren nach Anspruch 23, dadurch gekennzeichnet, daß das wässrige Raffinat einen $P_2O_5$-Gehalt zwischen 1 und 20 %, vorzugsweise um 10 % und einen $H_2SO_4$-Gehalt zwischen 1 und 15 % besitzt.

25. Verfahren nach irgendeinem der Ansprüche 15 bis 24, dadurch gekennzeichnet, daß die an Metallbestandteilen erschöpfte organische Phase nach der Reextraktion der Bestandteile und Trennung der wässrigen und organischen Phase vor ihrer Rückführung in die Extraktionszone der sauren Ausgangslösung einer Behandlung in einer Waschzone mit einer wässrigen Lösung unterworfen wird, wodurch man eine im wesentlichen von Flußsäure und Phosphorsäure freie organische Phase und eine angereicherte wässrige Waschlösung erhält, die mit der wässrigen Lösung der Reextraktion nach der Abtrennung der Fällung der Metallbestandteile vor der Rückführung in die Reextraktionszone vereint wird.

26. Verfahren nach Anspruch 25, dadurch gekennzeichnet, daß die genannte wässrige Waschlösung unter Wasser oder einer wässrigen Phosphorsäurelösung ausgewählt wird mit der Einschränkung, daß ihr Phosphorsäuregehalt unter dem der wässrigen Lösung der Reextraktion bei ihrem Eintritt in die Reextraktionszone liegt.

27. Verfahren nach Anspruch 25 oder 26, dadurch gekennzeichnet, daß die Wäsche in einer wenigstens einstufigen Waschzone erfolgt und daß das Verhältnis von zufließender organischer Phase zu der wässrigen Lösung 10 bis 100, vorzugsweise um 45 beträgt.

28. Verfahren nach irgendeinem der Ansprüche 25 bis 27, dadurch gekennzeichnet, daß der vereinte Strom nach der Vereinigung der angereicherten Waschlösung und der wässrigen Reextraktionslösung durch Verdampfen konzentriert wird, wodurch man ein Kondensat von Wasser und Flußsäure gewinnt, das mit dem aus dem Verdampfer austretenden Strom vereint wird, und ein wässriges Kondensat, das entfernt wird.

29. Verfahren nach irgendeinem der Patentansprüche 25 bis 28, dadurch gekennzeichnet, daß die den Verdampfer verlassene wässrige Lösung hinsichtlich ihres Gehaltes an HF und gegebenenfalls an Reduktionsmittel eingestellt wird bevor sie wieder in die Reextraktionszone geleitet wird.

30. Verfahren nach irgendeinem der Ansprüche 25 bis 29, dadurch gekennzeichnet, daß der Niederschlag der Metallbestandteile nach der Abtrennung zusätzlich mit einem Wasserstrom gewaschen und dann abgetrennt wird und daß die Mutterlauge der Wäsche gemeinsam mit der wässrigen sauren Ausgangslösung die Extraktionszone speist.

Fig.1

Fig.2

0 026 132

# Fig. 3

Fig. 4